# EUROPÄISCHE PATENTSCHRIFT

(11) **EP 4 232 274 B1**
(45) Veröffentlichungstag und Bekanntmachung des Hinweises auf die Patenterteilung: **04.12.2024**
(21) Anmeldenummer: 21790401.0
(22) Anmeldetag: 06.10.2021
(51) Int. Cl.: B30B 11/08, B30B 15/30

(54) **FÜLLEINHEIT FÜR EINE RUNDLAUFPRESSE UND EIN VERFAHREN ZUR BEREITSTELLUNG EINER OPTIMIERTEN RUNDLAUFPRESSE**
FILLING UNIT FOR A ROTARY PRESS, AND METHOD FOR PROVIDING AN OPTIMIZED ROTARY PRESS
UNITÉ DE REMPLISSAGE POUR PRESSE ROTATIVE ET PROCÉDÉ DE PRODUCTION DE PRESSE ROTATIVE OPTIMISÉE

(30) Priorität: 23.10.2020 DE 102020127992
(43) Veröffentlichungstag der Anmeldung: 30.08.2023
(73) Patentinhaber: Syntegon Technology GmbH, 71332 Waiblingen (DE)
(72) Erfinder: BRINZ, Thomas, 73266 Bissingen an der Teck (DE); WERNER, Fabian, 71336 Waiblingen (DE); GRASS, Torsten, 73660 Urbach (DE); MÖSSINGER, Matthias, 71577 Großerlach (DE)
(74) Vertreter: Novagraaf Group
(86) Internationale Anmeldenummer: PCT/EP2021/077511
(87) Internationale Veröffentlichungsnummer: WO 2022/084035

(56) Entgegenhaltungen:
- EP-A1- 3 406 436
- WO-A1-2015/186905
- DE-U1- 202007 002 707
- US-A1- 2018 036 981

## Beschreibung

Die Erfindung betrifft eine Fülleinheit für eine Rundlaufpresse mit den Merkmalen des Oberbegriffs des Anspruchs 1 und ein Verfahren zur Bereitstellung einer optimierten Rundlaufpresse mit Merkmalen des nebengeordneten Anspruchs.

Rundlaufpressen werden in der pharmazeutischen, technischen oder chemischen Industrie oder in der Nahrungsmittelindustrie eingesetzt, um aus pulverförmigen Materialien Tabletten oder Presslinge in großer Stückzahl herzustellen.

Rundlaufpressen weisen eine rotierend angetriebene Matrizenscheibe mit darin angeordneten Matrizenbohrungen, die sich auf einer Kreisbahn bewegen auf. Es sind Unter-und Oberstempel vorgesehen, die sich mit der Matrizenscheibe auf einer Kreisbahn bewegen und sich während des Umlaufes auf- und niederbewegen. Unter- und Oberstempel sind dabei derart ausgebildet, dass sie mit ihren oberen bzw. unteren Stempelenden in die in der Matrizenscheibe angeordneten Matrizenbohrungen einfassen, um das darin eingebrachte Pulvermaterial zu Tabletten zu komprimieren.

Das zu verpressende Pulver wird den Matrizenbohrungen über einen Trichter mit angebauter Fülleinheit mit rotierenden Flügelrädern zugeführt. Derartige Fülleinheiten werden z. B. in EP 3 406 436 A1 , das die Merkmale des Oberbegriffs von Anspruch 1 offenbart, und DE 20 2007 002 707 U1 gezeigt.

DE 10 2016 110 556 a1 und DE 35 27 186 A1 zeigen jeweils Fülleinheiten mit Merkmalen des Anspruchs 1.

Mit Hilfe der Flügelräder wird der Pulverfluss vom Trichter in die Matrizenbohrungen unterstützt, um eine gleichbleibende Befüllung und damit ein konstantes Gewicht jeder einzelnen Tablette zu erreichen.

Fülleinheiten mit zwei Flügelrädern werden in der Regel für frei fließende, nicht klebrige Produkte für pharmazeutische Anwendungen eingesetzt. Das Pulver wird direkt vom Trichter über das Füllrad und Dosierrad in die Matrizenbohrungen gefüllt und eindosiert.

Fülleinheiten mit drei Flügelrädern werden in der Regel bei Materialien mit schlechteren Fließeigenschaften eingesetzt um einen möglichst gleichmäßigen Fluss zu erreichen.

Fülleinheiten mit drei Flügelrädern tragen dazu bei, einen konstanten Druck auf den Zufuhrbereich aufrechtzuerhalten, was durch das Vorhandensein eines dritten Flügelrads, des Zuführrads, unterstützt wird. Dieses ist in der Regel über den beiden anderen Flügelrädern (Füllrad und Dosierrad) angeordnet.

Bei dieser Art der Zuführung wird das Pulver vom Trichter über das Zuführrad, das Füllrad und Dosierrad in die Matrizenbohrungen gefüllt und eindosiert.

Je nach Fließverhalten/Eigenschaften des Pulvers kann die Fülleinheit, um ein angepasstes Dosierverhalten zu erhalten, mit entsprechenden Flügelrädern ausgestattet und daher manuell umgebaut werden.

Die Aufgabe der vorliegenden Erfindung besteht darin, eine Fülleinheit für eine Rundlaufpresse und ein Verfahren zur Bereitstellung einer optimierten Rundlaufpresse zu schaffen, die die obigen Nachteile ausräumen.

Diese Aufgabe wird durch die erfindungsgemäße Fülleinheit für eine Rundlaufpresse mit den Merkmalen des Anspruchs 1 gelöst. Die erfindungsgemäße Fülleinheit umfasst:
Ein Füllrad, welches ausgebildet ist, um ein zu dosierendes Medium, insbesondere Pulver, in Matrizenbohrungen einer Matrizenscheibe der Rundlaufpresse zu füllen. Das Füllrad ist als Flügelrad ausgebildet. Das Füllrad weist Flügel auf und ist ausgebildet, um das zu dosierende Medium durch eine rotierende Bewegung mittels seiner Flügel zu befördern. Mit anderen Worten, die Flügel des als Flügelrad ausgebildeten Füllrades bewegen sich auf einer Kreisbahn um den Mittelpunkt des Füllrades.

Die Fülleinheit weist weiter ein Dosierrad auf, welches ausgebildet ist, um eine Menge an zu dosierendem Medium in den jeweiligen Matrizenbohrungen der Matrizenscheibe genau zu dosieren. Das Dosierrad ist als Flügelrad ausgebildet. Das Dosierrad weist Flügel auf und ist ausgebildet, um die Menge des zu dosierenden Mediums durch ein Überstreichen der Matrizenbohrungen der Matrizenscheibe mit seinen Flügeln mittels einer rotierenden Bewegung genau zu dosieren. Dabei wird überschüssiges Medium durch das Überstreichen der Matrizenbohrungen der Matrizenscheibe entfernt. Mit anderen Worten, die Flügel des als Flügelrad ausgebildeten Dosierrades bewegen sich auf einer Kreisbahn um den Mittelpunkt des Dosierrades und überstreichen dabei die Matrizenbohrungen.

Das Füllrad bewegt also das Pulver in die Matrizenbohrungen der Matrizenscheibe. Typischerweise ist die Unterseite der Matrizenbohrung dabei durch einen entsprechenden Unterstempel verschlossen. Bevor die Matrizenbohrung das Dosierrad erreicht, kann der Unterstempel geringfügig auf eine genau vorgesehene Stellung angehoben werden, um eine genau definierte Größe der Matrizenbohrung zu definieren. Anschließend wird der nach oben aus der Matrizenbohrung hinausragende Pulveranteil mittels des Dosierrads "abgestrichen", also entfernt.

Die Fülleinheit weist ein Zuführrad auf, welches ausgebildet ist, um das zu dosierende Medium dem Füllrad zuzuführen. Das Zuführrad ist als Flügelrad ausgebildet. Das Zuführrad weist Flügel auf und ist ausgebildet, um das dem Füllrad zuzuführende Medium durch eine rotierende Bewegung mittels seiner Flügel zu fördern. Mit anderen Worten, die Flügel des als Flügelrad ausgebildeten Zuführrades bewegen sich auf einer Kreisbahn um den Mittelpunkt des Zuführrades. Dabei fördern sie das zu dosierende Medium an das Füllrad.

Die Fülleinheit weist weiter mindestens eine Medienzuführeinheit auf, welche ausgebildet ist, um das Medium dem Füllrad zuzuführen. Alternativ oder ergänzend kann die Medienzuführeinheit das Medium dem Zuführrad zuführen. Das Medium gelangt in die Fülleinheit über die Medienzuführeinheit. Die Medienzuführeinheit kann beispielsweise einen Trichter, ein Rohr oder einen Schlauch umfassen.

Die Fülleinheit ist derart ausgebildet, dass das Zuführrad in einen Förderpfad des zu dosierenden Mediums schaltbar bzw. aus diesem herausschaltbar ist. Dies kann insbesondere durch eine Schwenkbewegung des Zuführrades geschehen. Insbesondere kann dabei das Zuführrad um eine Drehachse des als Flügelrad ausgebildeten Dosierrades geschwenkt werden. Hierzu kann eine entsprechende Schwenkeinrichtung vorgesehen sein. Das Zuführrad kann insbesondere mittels einer zweiten Medienzuführeinheit überbrückt bzw. umgangen werden. Es ist ebenso denkbar, dass die Medienzuführeinheit derart verschiebbar ausgebildet sein kann, dass durch Verschieben der Medienzuführeinheit gewählt werden kann, ob der Förderpfad des zu dosierenden Mediums durch das Zuführrad führt oder nicht.

Durch das Schalten bzw. Herausschalten des Zuführrades aus dem Förderpfad des zu dosierenden Mediums, oder Umgehen des Zuführrades, kann die Fülleinheit an verschiedene Medien mit unterschiedlichen Fließverhalten/Eigenschaften angepasst werden, ohne dass die einzelnen Flügelräder ausgetauscht werden müssen.

Mit Förderpfad des zu dosierenden Mediums ist vorliegend der Weg des Mediums durch die Fülleinheit in die Matrizenbohrungen gemeint.

Die Medienzuführeinheit kann eine Förderweiche umfassen. Mittels dieser Förderweiche kann das zu dosierende Medium wahlweise dem Zuführrad oder dem Füllrad zugeführt werden. Somit kann eine Wahl getroffen werden, ob der Förderweg des Mediums über das Zuführrad führt oder nicht, ohne dass ein Ausbau des Zuführrades, oder ein
Herausschalten/Herausschwenken des Zuführrades aus dem Förderweg, nötig ist.

Die Flügel des als Flügelrad ausgebildeten Füllrades, Dosierrades und/oder Zuführrades sind derart ausgebildet, dass eine Förderfläche der jeweiligen Flügel in ihrer Form variierbar ist.

Die Förderfläche der Flügel wird durch die Fläche der Flügel gebildet, mit der das jeweilige Flügelrad das Medium fördert. Die Förderfläche ist also der Teil der Flügel, der im Betrieb der Fülleinheit dazu ausgebildet und eingerichtet ist, das Medium zu kontaktieren und durch die jeweilige Rotationsbewegung zu fördern oder zu dosieren
Die Variation der Form der Förderfläche kann durch eine Rotation der Flügel des als Flügelrad ausgebildeten Füllrades, Dosierrades und/oder Zuführrades um ihre jeweilige Erstreckungsachse realisiert werden. Die Flügel des als Flügelrad ausgebildeten Füllrades, Dosierrades und/oder Zuführrades können hierzu um ihre jeweilige Erstreckungsachse rotierbar ausgebildet sein. Dabei können die Flügel durch eine Rotation um ihre jeweilige Erstreckungsachse in mindestens zwei Rotationstellungen bringbar sein, in denen die Flügel unterschiedlich geformte Förderflächen bilden. Das zu dosierende Medium kann je nach Rotationsstellung der Flügel mit unterschiedlich geformten Förderflächen gefördert werden.

Durch die Rotation/Drehung der Flügel in verschiedene Rotationstellungen können verschieden geformte Förderflächen realisiert werden. Die Rotation/Drehung der Flügel kann beispielsweise durch eine Zahnradmechanik, einen Schiebemechanismus, einen Kurbeltrieb, einen Seilzug, einen Kolbentrieb und/oder kurvengesteuert realisiert werden.

Die Flügel können insbesondere auf einer ersten Seite eine Förderfläche in Form eines Kreisabschnitts, insbesondere eines Halbkreises, aufweisen, insbesondere auf einer gegenüberliegenden Seite kann eine ebene Förderfläche vorgesehen sein. Durch einfaches Rotieren um 180 Grad kann die Förderfläche so zwischen der Form eines Flügels mit kreisrundem Querschnitt und einem Flügel mit bspw. quadratischem Querschnitt hin- und hergewechselt werden.

Die Flügel können insbesondere einen dreieckigen Querschnitt aufweisen. Insbesondere kann der Querschnitt der Flügel einem gleichschenkligen Dreieck, insbesondere einem gleichseitigen Dreieck, entsprechen. Dabei können die Flügel durch eine Rotation in eine Stellung gebracht werden, bei der ein Eck des dreieckigen Querschnitts nach unten zeigt und damit eine kantige Unterseite der Flügel bildet. So kann eine "scharfkantige" Unterseite realisiert werden. Die Flügel können auch so rotiert werden, dass ein Eck des dreieckigen Querschnitts nach oben zeigt. In diesem Fall bildet eine der Dreiecksseiten des Querschnitts die Unterseite der Flügel. Damit kann zwischen den verschiedenen Unterseiten der Flügel und eine gewünschte Einstellung gewählt werden. Selbstverständlich kann auch die Förderfläche der Flügel mit einem dreieckigen Querschnitt durch eine Rotation der Flügel variiert werden. Auch hier kann zwischen einer Förderfläche, die eben ausgebildet und einer Förderfläche, die eckig ausgestaltet ist, gewählt werden.

Die Flügel können insbesondere einen rechteckigen, insbesondere quadratischen, Querschnitt aufweisen. Bei einem rechteckigen Querschnitt, können zwei gegenüberliegende Seiten kürzer und die zwei anderen gegenüberliegenden Seiten länger ausgestaltet sein. Die zwei längeren Seiten des rechteckigen Querschnitts bilden dabei gegenüber den zwei kürzeren Seiten des rechteckigen Querschnitts eine jeweils größere Seitenfläche der Flügel. So kann durch eine Rotation der Flügel zwischen einer Förderfläche mit einer größeren Fläche und einer Förderfläche mit einer kleineren Fläche gewählt werden.

Die Form der Förderfläche kann durch eine variierbare Neigung der Flügel bezüglich einer sich von der Drehachse des jeweiligen Flügelrades erstreckten Radialrichtung veränderbar sein.

Mit anderen Worten, die Flügel des als Flügelrad ausgebildeten Füllrades, Dosierrades und/oder Zuführrades können derart ausgebildet sein, dass ein Winkel, der durch die jeweilige Erstreckungsachse der Flügel (bzw. deren Verlängerung) und einer von der Drehachse erstreckten Radialrichtung des jeweiligen Flügelrades aufgespannt wird, variiert werden kann. Die Neigung der Flügel kann ebenfalls mittels einer Zahnradmechanik realisiert werden. Auch eine Art "Seilzuglösung" zur Veränderung der Neigung der Flügel ist denkbar.

Die Form der Förderfläche kann durch eine variierbare Krümmung der Flügel des als Flügelrad ausgebildeten Füllrades, Dosierrades und/oder Zuführrades veränderbar sein. Mit einer Krümmung im Sinne dieser Anmeldung ist eine zumindest abschnittsweise, insbesondere bogenförmige, Abweichung von einem geraden Verlauf, gemeint. Insbesondere kann die Krümmung eine zumindest abschnittsweise, insbesondere bogenförmige, Abweichung von der von der Drehachse des jeweiligen Flügelrades erstreckten Radialrichtung sein. Die Flügel können mindestens einen Abschnitt mit einer variierbaren Krümmung aufweisen.

Eine variierbare Krümmung der Flügel kann beispielsweise durch ein Bimetall, ein Seilzug und/oder ein Zug- bzw. Druckelement realisiert werden. Es ist ebenso denkbar, dass die variierbare Krümmung nur entlang eines Abschnittes oder mehrerer Abschnitte der Flügel umgesetzt sein kann. Insbesondere kann die variierbare Krümmung entlang der gesamten Länge der Flügel realisiert werden.

Durch die Änderung der Form der Förderfläche der Flügel, kann das als Flügelrad ausgebildete Füllrad, Dosierrad und/oder Zuführrad an verschiedene Medien mit unterschiedlichen Fließverhalten/Eigenschaften angepasst werden, ohne dass die einzelnen Flügelräder ausgetauscht werden müssen. Somit ist ein Ausbauen der jeweiligen Flügelräder unnötig. Die Form der Förderfläche der Flügel kann im montierten Zustand des jeweiligen Flügelrades variiert/verändert werden ohne dass das jeweilige Flügelrad hierfür ausgebaut werden muss.

So ist es denkbar, dass die Form der Förderfläche der Flügel während des Betriebes der Rundlaufpresse variiert/eingestellt werden kann.

Es ist denkbar, dass die Form der Förderflächen während des Herstellungsprozesses der Tabletten bzw. während die jeweiligen Flügelräder das zu dosierende Medium durch die Fülleinheit befördern variiert werden kann. Es kann aber auch vorgesehen sein, dass der Herstellungsprozess der Tabletten, bzw. das Befördern des zu dosierenden Mediums durch die Fülleinheit kurzzeitig pausiert wird, dann die Form der Förderflächen verändert wird und anschließend der Herstellungsprozess der Tabletten, bzw. das Befördern des zu dosierenden Mediums durch die Fülleinheit wiederaufgenommen wird. In beiden Fällen ist eine Demontage der jeweiligen Flügelräder bzw. der Fülleinheit nicht nötig.

Die Flügel des als Flügelrad ausgebildeten Füllrades, Dosierrades und/oder Zuführrades können derart ausgestaltet sein, dass sie parallel zur Drehachse des jeweiligen Flügelrades verschiebbar sind. Mit anderen Worten, die Flügel sind höhenverstellbar ausgebildet. So kann beispielsweise bei einer Rotation der Flügel, deren Querschnitt von einer Kreisform abweicht, um ihre jeweilige Erstreckungsachse die untere Kante der Flügel auf einer konstanten Höhe bzw. auf einem konstanten Niveau gehalten werden. So kann gewährleistet werden, dass keine Lücken zwischen dem Flügelrad und dem darunter angeordneten Element der Fülleinheit entstehen. Mit anderen Worten, durch die Höhenanpassung der Flügel kann sichergestellt werden, dass während das Medium mittels des jeweiligen Flügelrades befördert wird, das gesamte zu befördernde Medium von den Flügeln erfasst und befördert wird.

Die Flügel des als Flügelrad ausgebildeten Füllrades, Dosierrades und/oder Zuführrades können einen dreieckigen, einen viereckigen, insbesondere quadratischen, oder einen zumindest teilweise abgerundeten Querschnitt aufweisen. Selbstverständlich sind auch Querschnitte mit anderen geometrischen Formen denkbar.

Die Flügel des als Flügelrad ausgebildeten Füllrades, Dosierrades und/oder Zuführrades können entlang eines Bereichs ihrer jeweiligen Erstreckungsachse einen gleichbleibenden Querschnitt aufweisen. Insbesondere kann der Querschnitt entlang der gesamten jeweiligen Erstreckungsachse gleich sein. Es ist aber auch denkbar, dass die Fläche des Querschnitts entlang der jeweiligen Erstreckungsachse von der jeweiligen Drehachse aus in Radialrichtung größer oder kleiner wird bzw. sich entlang der Erstreckungsachse, insbesondere gleichförmig, ändert.

Die Anzahl der Flügel des als Flügelrad ausgebildeten Füllrades, Dosierrades und/oder Zuführrades kann pro jeweiligem Flügelrad variieren, gerade und/oder ungerade sein.

Die Flügel des als Flügelrad ausgebildeten Füllrades, Dosierrades und/oder Zuführrades können austauschbar ausgebildet sein. Insbesondere können die Flügel als Austauschelement der einzelnen Flügelräder ausgebildet sein. So können die Flügel schnell und einfach gegen andere Flügel, insbesondere gegen Flügel mit einem anderen Querschnitt, ausgetauscht werden. So kann beispielsweise bei einer Beschädigung eines Flügels, der entsprechende Flügel ausgetauscht werden, ohne dass das gesamte Flügelrads ersetzt werden muss. Außerdem erweitert die Austauchbarkeit die Anzahl an verschiedenen Formen der Förderfläche.

Das als Flügelrad ausgebildete Füllrad, Dosierrad und/oder Zuführrad können jeweils Flügel aufweisen, die einen unterschiedlichen Querschnitt entlang ihrer jeweiligen Erstreckungsachse aufweisen. Mit anderen Worten das Füllrad, Dosierrad und/oder Zuführrad können jeweils unterschiedlich geformte Flügel aufweisen. So kann beispielsweise das Füllrad Flügel mit einem dreieckigen Querschnitt aufweisen, das Dosierrad Flügel mit einem runden Querschnitt aufweisen und das Zuführrad Flügel mit einem viereckigen Querschnitt aufweisen.

Die Flügel des als Flügelrad ausgebildeten Füllrades, Dosierrades und/oder Zuführrades können derart angeordnet sein, dass eine Verlängerung der jeweiligen Erstreckungsachse beabstandet zu einer Drehachse des jeweiligen Flügelrades verläuft. Die Verlängerung der jeweiligen Erstreckungsachse bildet also eine Tangente an einen Kreis um die Drehachse, wobei der Kreis einen von null verschiedenen Radius aufweist. Mit anderen Worten, die Flügel sind bezüglich einer vom Mittelpunkt des jeweiligen Flügelrades ausgehenden Radialrichtung geneigt angeordnet. Mit anderen Worten, die Verlängerung der jeweiligen Erstreckungsachse und die vom Mittelpunkt des jeweiligen Flügelrades ausgehen Radialrichtung spannen einen Winkel auf, der von Null verschiedenen ist, insbesondere zwischen Null und 90 Grad, insbesondere zwischen Null und 45 Grad, insbesondere zwischen 0 und 20 Grad, liegt.

Die Fülleinheit kann derart ausgebildet sein, dass die Drehrichtung und/oder die Drehgeschwindigkeit des als Flügelrad ausgebildeten Füllrades, Dosierrades und/oder Zuführrades variiert werden kann. Die Drehrichtung und/oder die Drehgeschwindigkeit kann vor der Tablettenherstellung entsprechend dem jeweiligen Medium (bzw. Pulver) voreingestellt werden. Es ist aber auch denkbar, dass die Drehrichtung und/oder die Drehgeschwindigkeit während der Tablettenherstellung, also während des Fördern des Mediums (bzw. während der Rotation der jeweiligen Flügelräder, variiert werden kann). Insbesondere kann die Drehrichtung unabhängig von der Drehgeschwindigkeit variiert werden.

Die Fülleinheit kann mindestens einen Elektromotor aufweisen. Dabei kann der Elektromotor direkt oder indirekt bspw. über mindestens ein Zahnrad und/oder ein Zahnriemen das als Flügelrad ausgebildete Füllrad, Dosierrad, oder Zuführrad antreiben. Es ist ebenso denkbar, dass mehrere Flügelräder von dem Elektromotor angetrieben werden. Es ist aber auch ebenso denkbar, dass jedes Flügelrad von einem separaten Elektromotor angetrieben wird.

Alternativ oder ergänzend kann der Elektromotor direkt oder indirekt bspw. über mindestens ein Zahnrad und/oder ein Zahnriemen die Rotationsstellung der Flügel und/oder die Neigung bzw. den Winkel, der durch die jeweilige Erstreckungsachse der Flügel und einer von der Drehachse erstreckten Radialrichtung des jeweiligen Flügelrades aufgespannt wird, variieren. Es ist denkbar, dass die Rotationsstellung der Flügel und der Neigung der Flügel bezüglich einer sich von der Drehachse des jeweiligen Flügelrades erstreckten Radialrichtung mittels desselben Elektromotors variiert werden. Es ist aber auch denkbar, dass für das Variieren der Rotationsstellung und der Neigung der Flügel jeweils ein separater Elektromotor vorgesehen sein kann.

Insbesondere können mehrere Elektromotoren eine Elektromotorgruppe bilden und als ein Austauschelement ausgebildet sein kann. So können mehrere Elektromotoren als ein Element schnell und einfach gegen eine andere Elektromotorengruppe ausgetauscht (z. B. bei einer Beschädigung) werden. Ebenso ist es denkbar, dass die Zahnräder, die ein Drehmoment von den Elektromotoren an die Flügelräder übertragen, als eine Zahnradgruppe ausgebildet sein können, wobei diese ebenso als ein Austauschelement ausgebildet sein können.

Insbesondere kann der Elektromotor in Form eines Servomotors oder eines Druckluftmotors ausgestaltet sein. Insbesondere können alle Elektromotoren in Form von Servomotoren oder Druckluftmotoren ausgestaltet sein. Es ist ebenso denkbar, dass alternativ oder zusätzlich zum Elektromotor ein pneumatischer und/oder hydraulischer Antrieb vorgesehen sein kann. Auch andere Antriebsarten sowie ein manueller Antrieb ("per Hand") sind denkbar.

Die obige Aufgabe wird zudem durch das erfindungsgemäße Verfahren zur Bereitstellung einer optimierten Rundlaufpresse mit den Merkmalen des nebengeordneten Anspruchs gelöst. Das erfindungsgemäße Verfahren umfasst die Schritte:
Bereitstellung einer ersten Rundlaufpresse mit einer einstellbaren Fülleinheit. Dabei weist die einstellbare Fülleinheit mindestens ein Element mit mindestens einem einstellbaren Konfigurationsparameter auf. Mit Konfigurationsparameter im Sinne dieser Anmeldung ist eine Größe gemeint, die die Beförderung des Mediums innerhalb der Fülleinheit (bzw. Rundlaufpresse) und/oder Eigenschaften der hergestellten Tabletten (z. B. Tablettenqualität) beeinflusst.

Herstellung von mehreren Tabletten mit der ersten Rundlaufpresse mit jeweils unterschiedlichen Einstellungen des Konfigurationsparameters. Dabei können zum Beispiel Chargen von Tabletten hergestellt werden, wobei jede Charge mit einer unterschiedlichen Einstellung des Konfigurationsparameters hergestellt werden kann.

Somit können mittels der ersten Rundlaufpresse mit der einstellbaren Fülleinheit verschiedene Einstellungen für einen Konfigurationsparameter ausprobiert werden um die optimalen Einstellungen zu finden. Ein Wechsel und/oder Austausch der entsprechenden, den Konfigurationsparameter betreffenden Elemente ist nicht nötig.

Analysieren der hergestellten Tabletten auf gewünschte Eigenschaften, um zwischen den hergestellten Tabletten eine Tablette (bzw. Charge von Tabletten) mit bevorzugten Eigenschaften zu identifizieren. Dies können insbesondere Qualitätsmerkmale der Tablette (z. B. besonders gute Festigkeit, Gewicht, Bruchfestigkeit, Steghöhe) sein.

Identifizierung der Einstellung des Konfigurationsparameters, bei der die Tablette (bzw. die Charge) mit bevorzugten Eigenschaften hergestellt wurde.

Bereitstellung mindestens einer zweiten Rundlaufpresse mit einer optimierten Fülleinheit. Dabei weist die optimierte Fülleinheit mindestens ein Element mit einem fest vorgegebenen Konfigurationsparameter auf, bei der die Tablette (bzw. Tablettencharge) mit bevorzugten Eigenschaften hergestellt wurde.

Mit anderen Worten, nachdem der optimale Konfigurationsparameter mittels der ersten Rundlaufpresse mit der einstellbaren Fülleinheit identifiziert werden konnte, wird dieser Konfigurationsparameter auf eine zweite Rundlaufpresse übertragen. Dieser Konfigurationsparameter ist dann auf der zweiten Rundlaufpresse nicht mehr einstellbar. Es ist ebenso denkbar, dass die erste Rundlaufpresse mit einer derart einer optimierten Fülleinheit ausgestaltet wird. Mit anderen Worten, die erste Rundlaufpresse mit einer einstellbaren Fülleinheit kann zu einer Rundlaufpresse mit einer optimierten Fülleinheit umgebaut werden.

Dadurch, dass die Elemente der zweiten Rundlaufpresse bereits die optimalen Konfigurationsparameter aufweisen und nicht mehr eingestellt werden müssen, können diese Elemente einfacher ausgestaltet werden. Zusätzliche Elemente/Teile, die für die Einstellbarkeit benötigt werden, können weggelassen werden. Dadurch werden die entsprechenden Elemente günstiger in der Herstellung. Die zweite Rundlaufpresse kann somit günstiger und kleiner ausgeführt werden. Zudem können die Elemente der zweiten Rundlaufpresse robuster und langlebiger ausgestaltet werden.

Bei der Herstellung der Tabletten mittels einer Rundlaufpresse ist eine gewisse Anlaufzeit nötig. So dauert es z. B. einige Zeit, bis das zu dosierende Medium sich auf dem gesamten Förderweg gleichmäßig verteilt hat. Das bedeutet, dass die ersten Tabletten einer Charge von den übrigen Tabletten derselben Charge abweichende Eigenschaften aufweisen können.

Es ist daher denkbar, dass zur Identifizierung des optimalen Konfigurationsparameters die ersten Tabletten einer Charge nicht bei der Analyse der hergestellten Tabletten berücksichtigt werden. Es ist aber auch denkbar, dass die Charge eine derart große Anzahl an Tabletten aufweist, dass die Abweichung der Tabletteneigenschaften zwischen den ersten Tabletten und den restlichen Tabletten einer Charge sich aufgrund der hohen Anzahl der Tabletten in der Charge vernachlässigbar ist.

Die einstellbare Fülleinheit der ersten Rundlaufpresse ist eine Fülleinheit gemäß obiger Ausführungen.

Der einstellbare Konfigurationsparameter kann die Drehrichtung oder die Drehgeschwindigkeit des als Flügelrad ausgebildeten Füllrades, Dosierrades/oder Zuführrades sein.

Es ist ebenso denkbar, dass der einstellbare Konfigurationsparameter Geschwindigkeit, Vordruck, Hauptdruck, Gewichtsdosierung, Eintauchtiefe bzw. Position des Presslings in der Matrize sein kann.

Das Schalten bzw. Herausschalten des Zuführrades aus dem Förderpfad bzw. in den Förderpfad des zu dosierenden Mediums, kann ebenso einen Konfigurationsparameter darstellen. Mit anderen Worten, ein Konfigurationsparameter kann die Anordnung des Zuführrades im oder außerhalb des Förderpfades des zu dosierenden Mediums darstellen.

Der einstellbare Konfigurationsparameter kann die Form der Förderflächen der Flügel oder die Neigung der Flügel sein. Dabei kann die Form der Förderflächen der Flügel durch eine Rotation der Flügel um ihre jeweilige Erstreckungsachse verändert werden. Mit der Neigung der Flügel ist der Winkel gemeint, der durch die jeweilige Erstreckungsachse (bzw. deren Verlängerung) der Flügel und einer von der Drehachse erstreckten Radialrichtung des jeweiligen Flügelrades aufgespannt wird.

Bei dem Schritt Herstellung von Tabletten mit der ersten Rundlaufpresse können mehrere Konfigurationsparameter zeitgleich verändert werden. Es ist denkbar, dass die mehreren Konfigurationsparameter an demselben Element eingestellt werden können. Es ist aber ebenso denkbar, dass die mehrere Konfigurationsparameter an mehreren Elementen eingestellt werden können, wobei insbesondere jeweils ein Konfigurationsparameter an einem Element eingestellt werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht auf eine Rundlaufpresse mit einer Fülleinheit;
- Fig. 2: eine Draufsicht auf die Fülleinheit mit einer Matrizenscheibe gemäß Fig. 1;
- Fig. 3: eine perspektivische Ansicht auf ein weiteres Ausführungsbeispiel der Fülleinheit;
- Fig. 4: eine perspektivische Ansicht auf ein weiteres Ausführungsbeispiel der Fülleinheit;
- Fig. 5: eine perspektivische Ansicht auf ein weiteres Ausführungsbeispiel der Fülleinheit;
- Fig. 6: einen Ausschnitt einer perspektivischen Ansicht auf die Fülleinheit gem. Fig. 5 von einer anderen Perspektive;
- Fig. 7: eine perspektivische Ansicht auf ein als Flügelrad ausgebildetes Füllrad, Dosierrad und Zuführrad nebst Zahnräder;
- Fig. 8: eine perspektivische Ansicht auf ein Flügelrad gem. Fig. 7;
- Fig. 9: eine perspektivische Ansicht auf ein weiteres Ausführungsbeispiel des Flügelrads;
- Fig. 10: eine perspektivische Ansicht auf ein weiteres Ausführungsbeispiel des Flügelrads;
- Fig. 11: eine perspektivische Ansicht auf ein weiteres Ausführungsbeispiel des Flügelrads und
- Fig. 12: ein Flussdiagram eines Verfahren zur Bereitstellung einer optimierten Rundlaufpresse.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

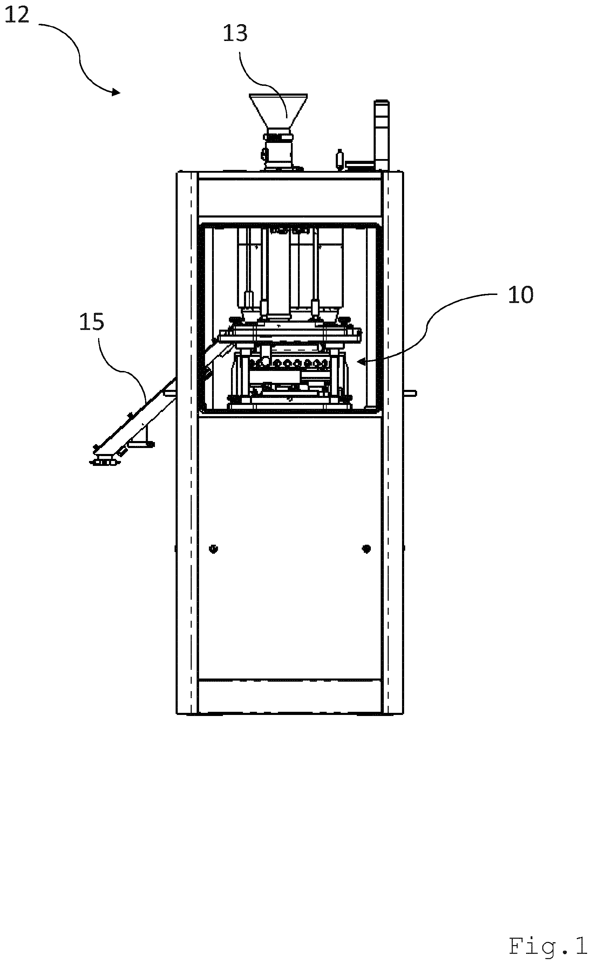

Figur 1 zeigt eine Seitenansicht auf eine Rundlaufpresse 12 mit einer Fülleinheit 10. Vorliegend gelangt das zu dosierende Medium, also das zu den Tabletten zu verpressende Pulver, über einen Trichter 13 in die Rundlaufpresse 12. Nach dem Pressen der Tabletten werden diese über die Auslaufrutsche 15 aus der Rundlaufpresse 12 befördert.

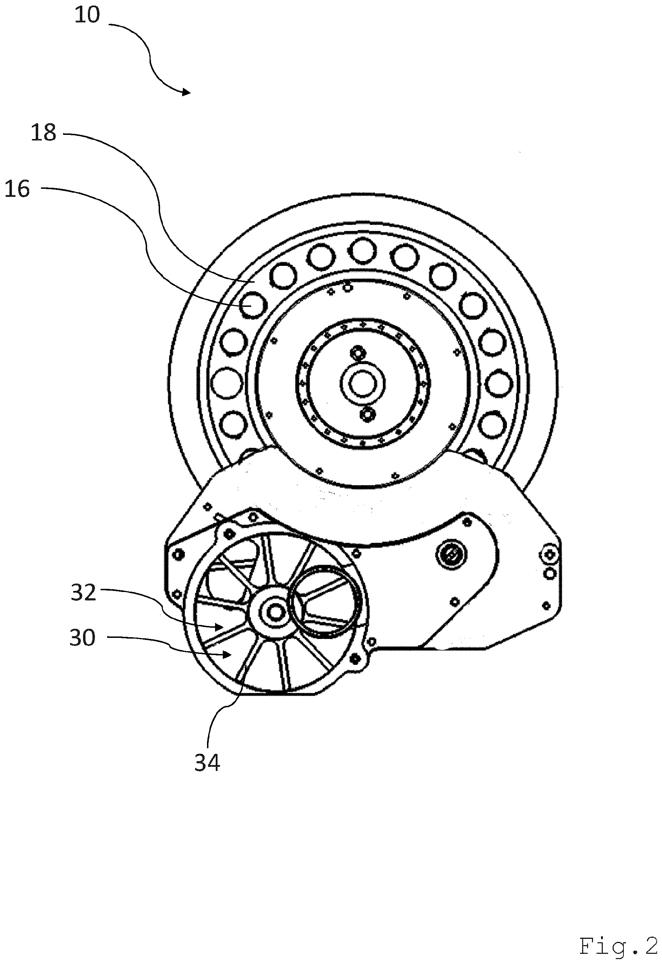

Figur 2 zeigt eine Draufsicht auf die Fülleinheit 10 mit einer Matrizenscheibe 18 gemäß Fig. 1. Die Matrizenscheibe 18 weist mehrere auf einer Kreisbahn angeordnete Matrizenbohrungen 16 auf, in die das zu den Tabletten zu verpressende Medium mittels der Fülleinheit 10 eindosiert wird.

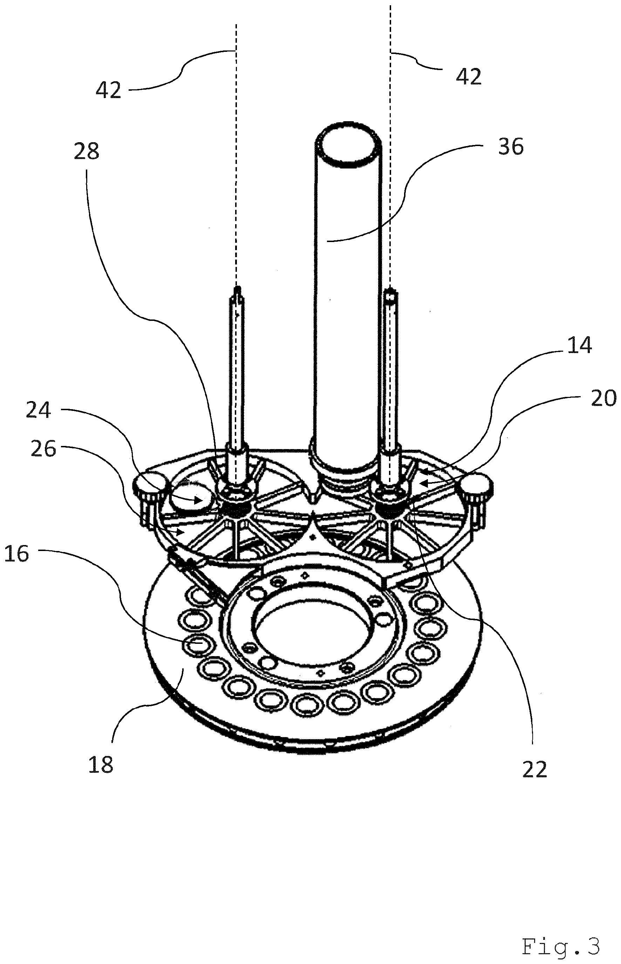

Figur 3 zeigt eine perspektivische Ansicht auf ein weiteres Ausführungsbeispiel der Fülleinheit 10. Das zu dosierende Medium wird über die Medienzuführeinheit 36 einem Füllrad 14 zugeführt. Vorliegend ist die Medienzuführeinheit 36 als ein gerade verlaufendes Rohr ausgebildet.

Der Übersichtlichkeit halber ist ein in den Förderpfad schaltbares Zuführrad 30 in Figur 3 nicht dargestellt. Der dargestellte Förderpfad entspricht einem Förderpfad, bei dem das Zuführrad aus dem Förderpfad herausgeschaltet ist.

Das Füllrad 14 ist als Flügelrad 20 mit Flügeln 22 ausgeführt. Das Füllrad 14 befördert das zu dosierende Medium in die Matrizenbohrungen 16 der Matrizenscheibe 18. Dies geschieht durch eine Rotation des Füllrades 14 um seine Drehachse 42 (mittels einer gestrichelten Linie angedeutet).

Die Menge des zu dosierenden Mediums in den Matrizenbohrungen 16 der Matrizenscheibe 18 wird mittels eines Dosierrades 24 genau dosiert. Das Dosierrad ist als Flügelrad 26 mit Flügeln 28 ausgebildet. Dies geschieht durch eine Rotation des Dosierrades 24 um seine Drehachse 42 (mittels einer gestrichelten Linie angedeutet). Dabei werden die Matrizenbohrungen 16 von den Flügeln 28 des Dosierrades 24 überstrichen, sodass überschüssiges Medium entfernt wird und eine genau definierte Menge Medium in den Matrizenbohrungen 16 zurückbleibt.

Die in einer Matrizenbohrung 16 verbleibende Menge Medium wird anschließend zu einer Tablette verpresst. Dies kann beispielsweise mittels eines Unter- und/oder Oberstempels realisiert werden, die relativ zueinander bewegt werden (nicht dargestellt).

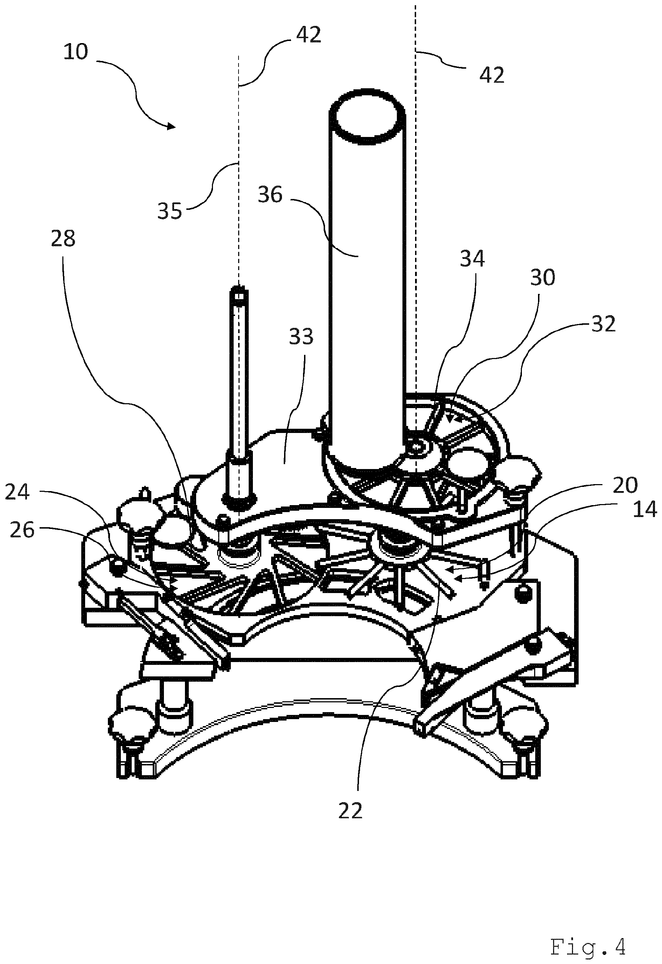

Figur 4 zeigt eine perspektivische Ansicht auf ein weiteres Ausführungsbeispiel der Fülleinheit 10. Die dargestellte Fülleinheit 10 weist, analog zum in Figur 3 dargestellten Ausführungsbeispiel, ein Füllrad 14 und ein Dosierrad 24 auf. Vorliegend ist die Matrizenscheibe 18 mit den Matrizenbohrungen 16 nicht dargestellt. Vorliegend ist das Zuführrad 30 der Fülleinheit 10 dargestellt. Dieses ist im Förderpfad zwischen der Medienzuführungseinheit 36 und dem Füllrad 14 angeordnet.

Die Medienzuführungseinheit 36 führt das zu dosierende Medium dem Zuführrad 30 zu. Das Zuführrad 30 ist als Flügelrad 32 mit Flügeln 34 ausgebildet. Das zu dosierende Medium wird mittels des Zuführrades 30 einem Füllrad 14 zugeführt. Dies geschieht durch eine Rotation des Zuführrades 30 um seine Drehachse 42 (mittels einer gestrichelten Linie angedeutet).

Vorliegend ist das Zuführrad 30 auf einer Schwenkeinrichtung 33 angeordnet. Die Schwenkeinrichtung 33 und damit auch das Zuführrad 30 können um die Schwenkachse 35 geschwenkt werden. Vorliegend ist die Schwenkachse 35 und die Drehachse 42 des Dosierrades 24 identisch. So kann das Zuführrad 30 aus dem Förderpfad des Mediums herausgeschwenkt werden bzw. in den Förderpfad des Mediums geschwenkt werden.

Der dargestellte Förderpfad des Mediums verläuft über die Medienzuführeinheit 36, die das Medium dem Zuführrad 30 zuführt. Dieses befördert das Medium durch eine Drehung um seine Drehachse 42 zum Füllrad 14. Das Füllrad 14 befüllt die Matrizenbohrungen 16 (nicht dargestellt) mittels einer Drehung um seine Drehachse 42 (nicht dargestellt). Anschließend wird das in den Matrizenbohrungen 16 eingefüllte Medium durch Überstreichen mit den Flügeln 28 des Dosierrades 24 genau eindosiert. Dies wird ebenfalls durch eine Drehung des Dosierrades 24 um seine Drehachse 42 bewirkt.

Wird das Zuführrad 30 um die Schwenkachse 35 aus dem Förderpfad heraus geschwenkt, so verläuft der Förderpfad des Mediums dann über die Medienzuführeinheit 36, die das Medium direkt dem Füllrad 14 zuführt. Anschließend wird das Medium vom Füllrad in die Matrizenbohrungen gefüllt und anschließend vom Dosierrad 24 genau eindosiert (siehe oben).

Alternativ oder zusätzlich zu der Schwenkeinrichtung 33 kann die Medienzuführeinheit 36 eine Förderweiche (nicht dargestellt) aufweisen, die das Medium wahlweise entweder direkt dem Zuführrad 30 oder dem Füllrad 14 zuführt. So kann zwischen einem Förderpfad mit dem Zuführrad 30 und einem Förderpfad ohne dem Zuführrad 30 gewählt werden, ohne dass hierfür ein Herausschwenken des Zuführrades 30 aus dem Förderpfad nötig ist.

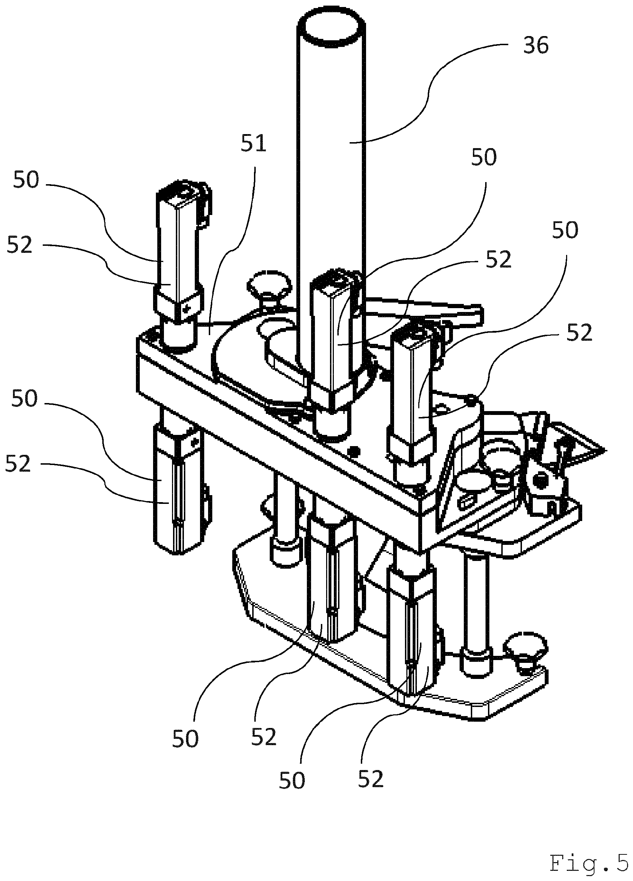

Figur 5 zeigt eine perspektivische Ansicht auf ein weiteres Ausführungsbeispiel der Fülleinheit 10. Vorliegend sind das Füllrad 14, das Zuführrad 30 sowie das Dosierrad 24 durch eine Abdeckung 51 verdeckt nicht abgebildet.

Vorliegend sind sechs Elektromotoren 50, die in Form von Servomotoren 52 ausgebildet sind, dargestellt. Dabei sind jeweils zwei Servomotoren 52 einander gegenüberliegend angeordnet. Wobei jeder Servomotor 52 einzeln und unabhängig von den restlichen Servomotoren 52 gesteuert bzw. betrieben werden kann. Die Servomotoren 52 können als eine Servomotorengruppe ausgebildet sein, die als ein Austauschelement ausgebildet ist. So können beispielsweise die in Figur 5 drei oberen Servomotoren 52 ein Austauschelement bilden und die in Figur 5 drei unteren Servomotoren 52 ein weiteres Austauschelement bilden. So können beispielsweise bei einem Defekt, die Servomotoren 52 schnell und einfach ausgetauscht werden.

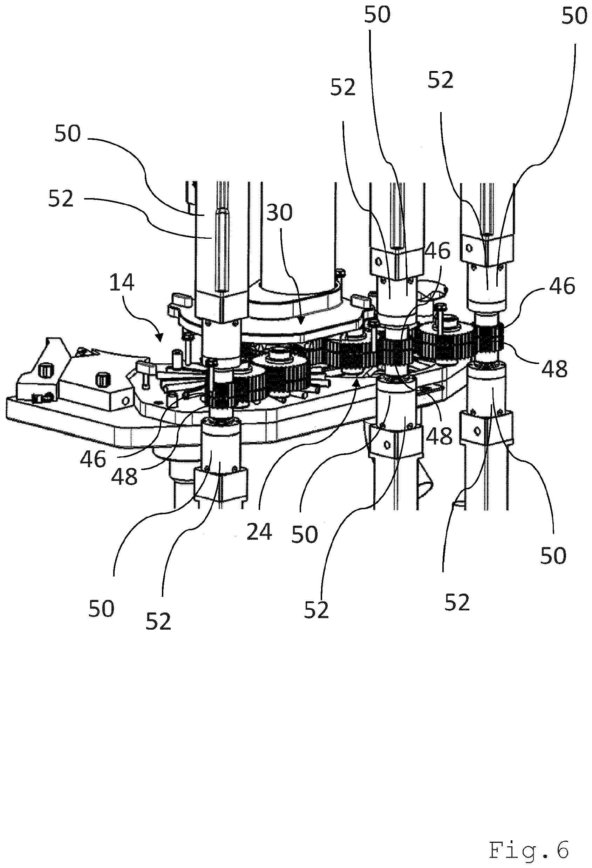

Figur 6 zeigt einen Ausschnitt einer perspektivischen Ansicht auf die Fülleinheit 10 gemäß Fig. 5 von einer anderen Perspektive. Vorliegend ist die Abdeckung 51 nicht dargestellt, so dass das in Figur 5 verdeckte Füllrad 14, das Zuführrad 30 sowie das Dosierrad 24 erkennbar sind.

Das Füllrad 14, das Zuführrad 30 sowie das Dosierrad 24 sind mittels Zahnräder 46, 48 mit den Servomotoren 52 gekoppelt. Durch die Zahnräder 46, 48 kann ein Drehmoment von dem jeweiligen Servomotor 52 auf das Füllrad 14, Zuführrad 30 bzw. Dosierrad 24 übertragen werden. Das übertragene Drehmoment kann dann zur Drehung des als Flügelrad 20, 26, 32 ausgebildeten Füllrades 14, des Zuführrades 30 und/oder des Dosierrades 24 benutzt werden und/oder zur Verstellung der Rotationsstellung, der Neigung und/oder der Krümmung der Flügel 22, 28, 34 des entsprechenden Flügelrads 20, 26, 32 benutzt werden.

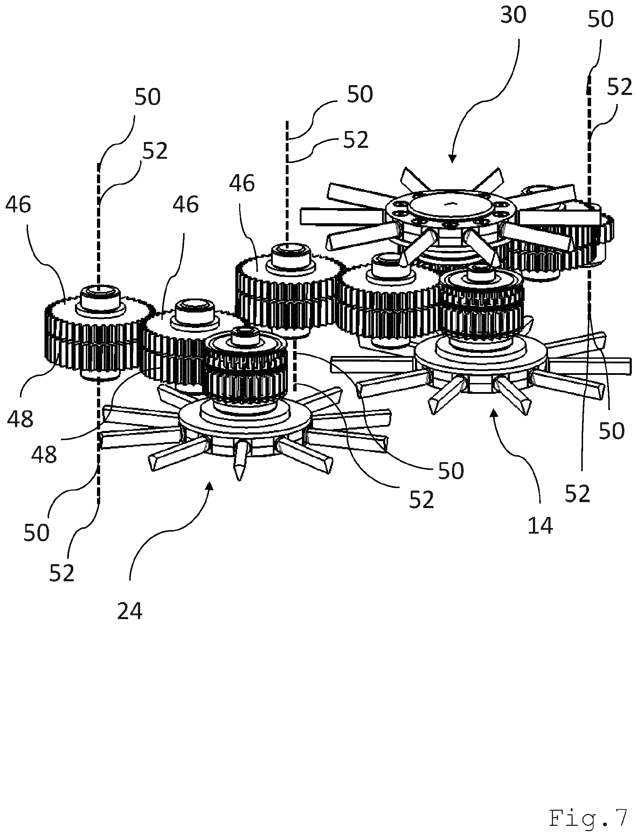

Figur 7 zeigt eine perspektivische Ansicht auf ein Füllrad 14, Dosierrad 24 und Zuführrad 30 nebst Zahnräder 46, 48. Es sind sechs Servomotoren 52 mittels gestrichelter Linien angedeutet. Vorliegend wird das Drehmoment von drei in Figur 7 oben angeordneten Servomotoren 52 jeweils auf ein erstes Zahnrad 46 übertragen. Dieses kämmt mit einem zweiten Zahnrad 46 und das zweite Zahnrad 46 kämmt mit einem dritten Zahnrad 46, welches auf dem Füllrad 14, Dosierrad 24 bzw. Zuführrad 30 angeordnet ist. Entsprechend wird das Drehmoment von den drei restlichen (in Figur 7 unten angeordneten Servomotoren 52) Servomotoren 52 jeweils auf ein erstes Zahnrad 48 übertragen. Dieses kämmt mit einem zweiten Zahnrad 48 und das zweite Zahnrad 48 kämmt mit einem dritten Zahnrad 48, welches auf dem Füllrad 14, Dosierrad 24 bzw. Zuführrad 30 angeordnet ist. So wird das Drehmoment des jeweiligen Servomotors 52 auf das Füllrad 14, das Dosierrad 24 bzw. das Zuführrad 30 übertragen.

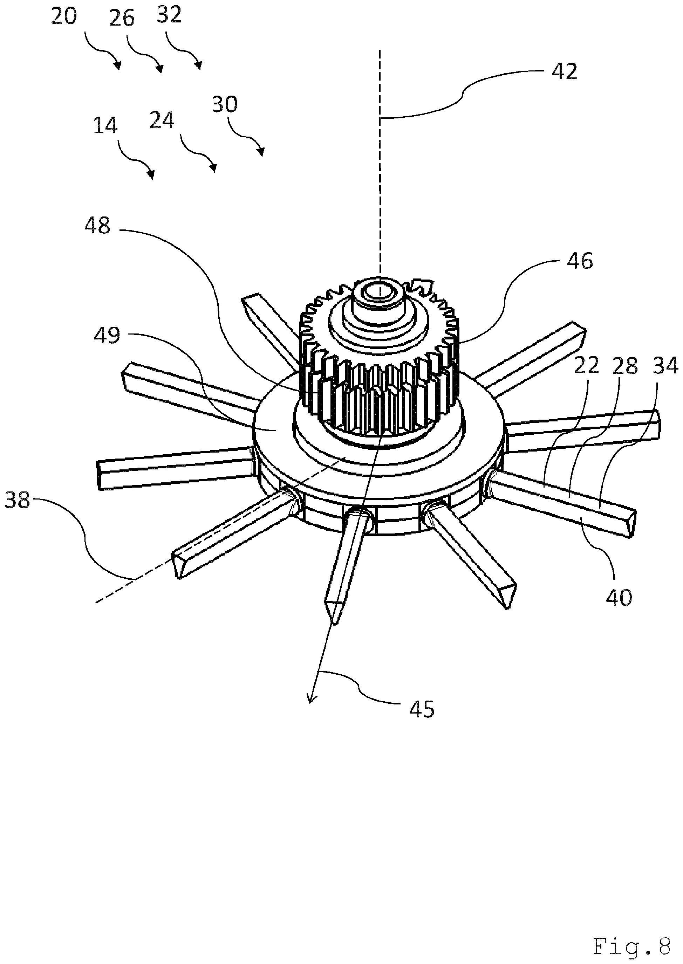

Figur 8 zeigt eine perspektivische Ansicht auf ein Flügelrad 20, 26, 32 gemäß Fig. 7. bei dem dargestellten Flügelrad 20, 26,32 kann es sich um ein Füllrad 14, Zuführrad 30 oder ein Dosierrad 24 handeln.

Das Flügelrad 20, 26, 32 weist eine Drehachse 42 auf, um die das Füllrad 20, 26, 32 rotierbar ist. Das Flügelrad 20, 26, 32 weist zehn Flügel 22, 28, 34 auf. Vorliegend erstrecken sich die Flügel 22, 28, 34 entlang einer Radialrichtung 45, die sich von der Drehachse 42 und senkrecht zur Drehachse 42 nach radial außen erstreckt. Die Flügel 22, 28,34 weisen eine Erstreckungsachse 38 auf, die der Längsachse der Flügel 22, 28,34 entspricht.

Die Flügel 22, 28, 34 weisen vorliegend einen dreieckigen Querschnitt auf, wobei in der dargestellten Stellung eine Ecke des Dreiecks die untere Kante des jeweiligen Flügels 22, 28,34 darstellt.

Das Flügelrad 20, 26, 32 weist ein oberes Zahnrad 46 und ein unteres Zahnrad 48 auf, wobei das Flügelrad 20, 26, 32 und die beiden Zahnräder 46, 48 jeweils dieselbe Drehachse 42 aufweisen, also koaxial zueinander angeordnet sind. Das Flügelrad 20, 26, 32 ist über das untere Zahnrad 48 rotierbar ausgestaltet. Dies kann beispielsweise realisiert werden, in dem das untere Zahnrad 48 und das Flügelrad 20, 26, 32 drehfest miteinander gekoppelt sind.

Wird das Flügelrad 20, 26, 32 rotiert, so dreht es sich um die Drehachse 42 und befördert das Medium, das sich zwischen den einzelnen Flügeln 22, 28,34 befindet, mit einer jeweiligen Förderfläche 40.

Über das obere Zahnrad 46 können die Flügel 22, 28,34 um ihre jeweilige Erstreckungsachse 38 rotiert werden. Es ist ebenso denkbar, dass über das Zahnrad 46 die Höhe (Verschiebung parallel zur Drehachse 42), die Neigung und/oder die Krümmung der Flügel 22, 28,34 veränderbar sein kann. Die hierfür benötigten Elemente, beispielsweise in Form einer entsprechenden Mechanik und/oder Elektrik, können in einem Korpus 49 des Flügelrads 20, 26, 32 angeordnet sein.

Das untere Zahnrad 48 ist zwischen dem oberen Zahnrad 46 und dem Flügelrad 20, 26, 32 angeordnet. Selbstverständlich ist es denkbar, dass das obere Zahnrad 46 zwischen dem unteren Zahnrad 48 und dem Flügelrads 20, 26,32 angeordnet ist bzw. dass die Funktionen des oberen und unteren Zahnrads 46, 48 vertauscht sind.

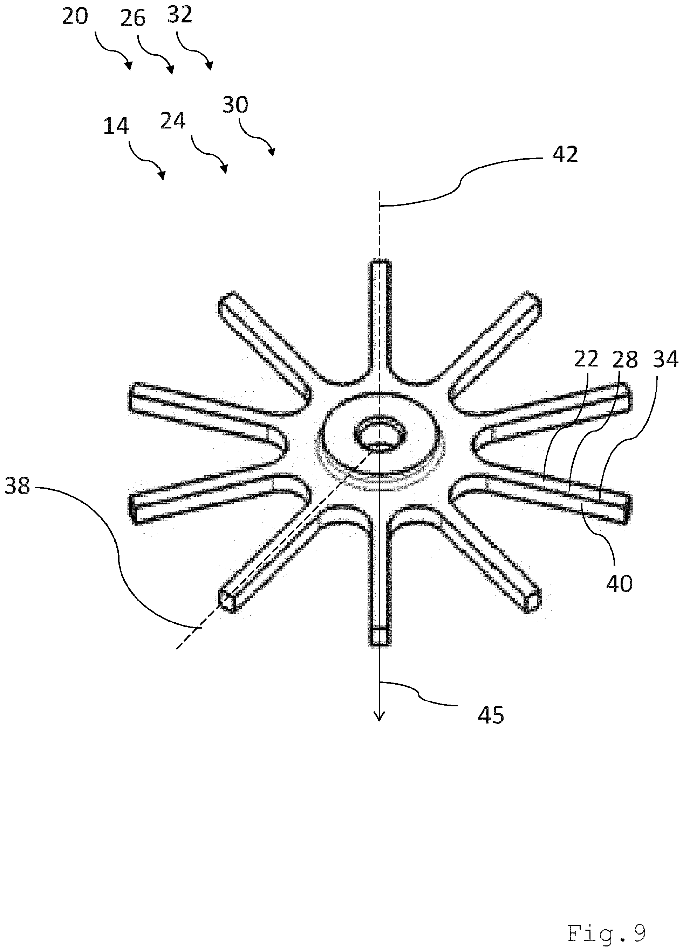

Figur 9 zeigt eine perspektivische Ansicht auf ein weiteres Ausführungsbeispiel des Flügelrads 20, 26, 32. Vorliegend weist das Flügelrad 20, 26,32 gerade verlaufende Flügel 22, 28, 34 mit einem viereckigen (quadratischen) Querschnitt auf.

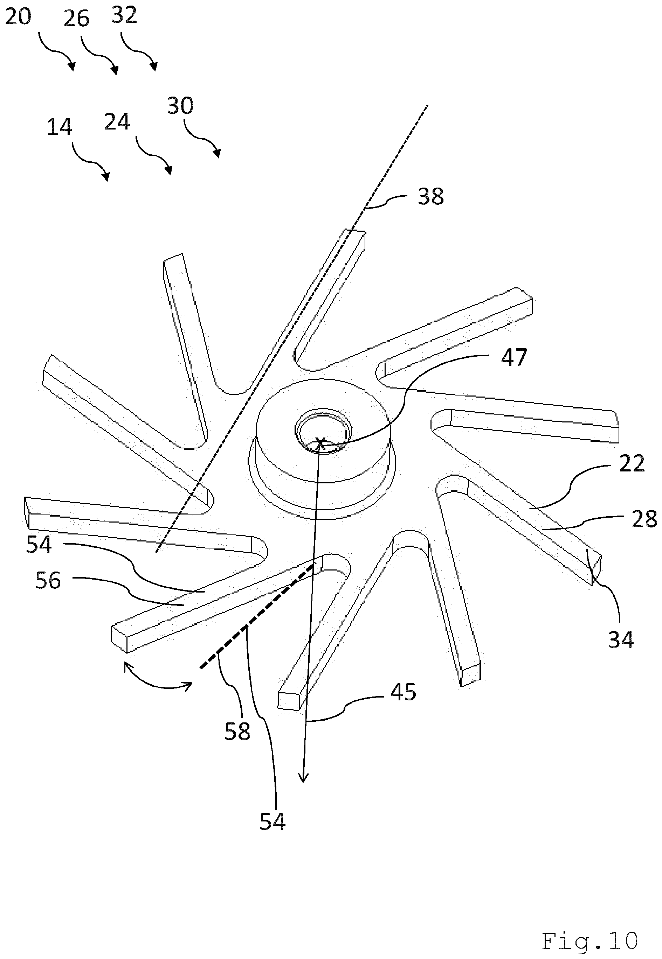

Figur 10 zeigt eine perspektivische Ansicht auf ein weiteres Ausführungsbeispiel des Flügelrads 20, 26, 32. Vorliegend ist ein Flügelrad 20, 26, 32 mit geneigten Flügeln 22, 28,34 dargestellt. Die Verlängerung der jeweiligen Erstreckungsachse 38 der Flügel 22, 28, 34 (gestrichelt angedeutet) schneitet dabei nicht den als "x" markierten und mit der Bezugszahl 47 bezeichneten Mittelpunkt des Flügelrads 20, 26, 32. Die jeweilige Erstreckungsachse 38 bzw. deren Verlängerung ist also beabstandet zum Mittelpunkt 47 angeordnet.

Bei einem Flügelrad 20, 26, 32 mit einer variierbaren Neigung können die Flügel 22, 28, 34 derart verstellt werden, dass der Winkel zwischen der Erstreckungsachse 38 (bzw. deren Verlängerung) des jeweiligen Flügels 22, 28, 34 und der Radialrichtung 45 variiert werden kann. So kann beispielsweise ein Flügel 54 aus seiner skizziert dargestellten ersten Anordnung 56 in eine durch eine gestrichelte Linie angedeutete zweite Anordnung 58 gebracht werden. Wie deutlich zu erkennen ist, ist der Winkel zwischen dem Flügel 54 in der ersten Anordnung 56 und der Radialrichtung 45 ein anderer (größerer) als der zwischen dem Flügel 54 in der zweiten Anordnung 58 und der Radialrichtung 45. Das Variieren der Neigung ist hier durch einen Doppelpfeil angedeutet.

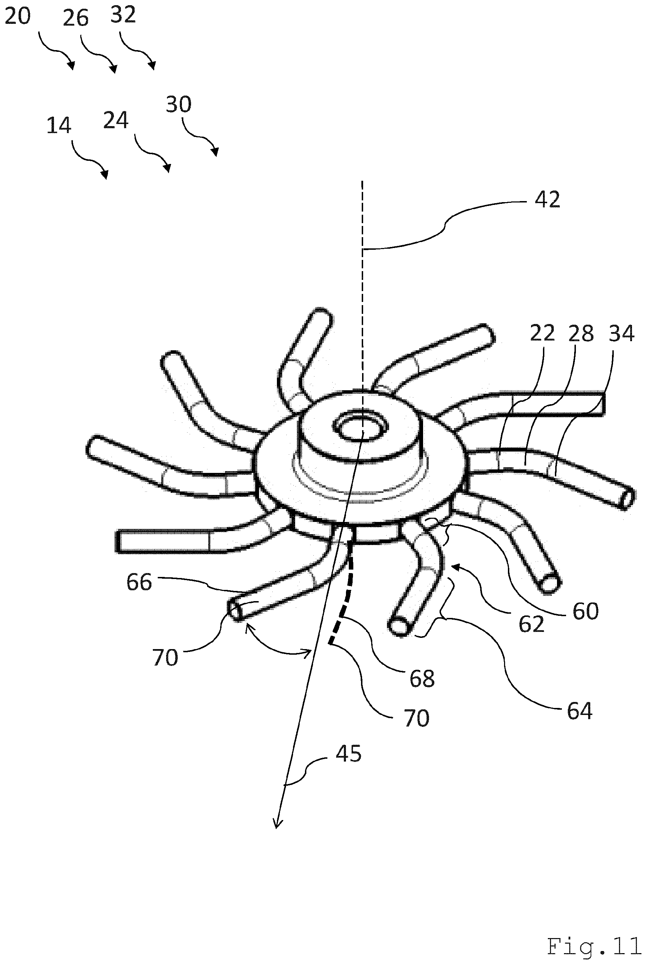

Figur 11 zeigt eine perspektivische Ansicht auf ein weiteres Ausführungsbeispiel des Flügelrads 20, 26, 32. Das vorliegende Ausführungsbeispiel des Flügelrads 20, 26,32 weist Flügel 22, 28, 34 mit einer Krümmung auf. Die Flügel 22, 28,34 weisen jeweils einen ersten Abschnitt 60 auf, in dem sich die Flügel 22, 28,34 entlang der Radialrichtung 45 (also gerade radial nach außen) erstrecken. An den ersten Abschnitt 60 schließt sich ein zweiter Abschnitt 62 an, der gekrümmt in Bezug auf die Radialrichtung 45 ausgestaltet ist. An den zweiten Abschnitt 62 schließt sich ein dritter Abschnitt 64 an, der wiederum (analog zum ersten Abschnitt 60) gerade ausgestaltet ist.

Eine mögliche variierbare Krümmung der Flügel 22, 28,34 des Flügelrads 20, 26, 32 ist (analog zur Figur 10) durch einen Doppelpfeil und einer ersten Anordnung 66 und einer zweiten Anordnung 68 (gestrichelt angedeutet) des Flügels 70 angedeutet. Vorliegend wird durch das Variieren der Krümmung ebenso der Außendurchmesser des Flügelrads 20, 26, 32 verändert. Eine stärkere Krümmung der Flügel 22, 28, 34 in Bezug auf die Radialrichtung 45 bewirkt einen kleineren Außendurchmesser des Flügelrads 20, 26, 32. Eine geringere (kleinere) Krümmung der Flügel 22, 28, 34 in Bezug auf die Radialrichtung 45 bewirkt einen größeren Außendurchmesser des Flügelrads 20, 26, 32.

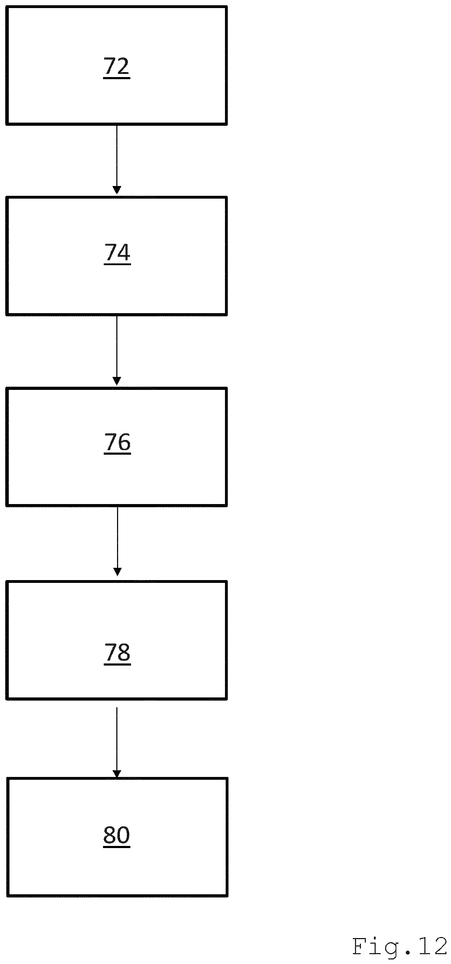

Figur 12 zeigt ein Flussdiagram eines Verfahren zur Bereitstellung einer optimierten Rundlaufpresse.

Dabei wird der Verfahrensschritt der Bereitstellung einer ersten Rundlaufpresse 12 mit einer einstellbaren Fülleinheit 10, wobei die einstellbare Fülleinheit 10 mindestens ein Element mit mindestens einem einstellbaren Konfigurationsparameter aufweist, mit der Bezugszahl 72 bezeichnet.

Der daraufhin folgende Verfahrensschritt der Herstellung von mehreren Tabletten mit der ersten Rundlaufpresse 12 mit jeweils unterschiedlichen Einstellungen des Konfigurationsparameters wird durch die Bezugszahl 74 bezeichnet.

Dieser Verfahrensschritt 74 kann beliebig oft mit beliebig vielen unterschiedlichen Konfigurationsparametern durchgeführt werden.

Nachdem die Tabletten hergestellt wurden, folgt der Verfahrensschritt des Analysierens der hergestellten Tabletten auf gewünschte Eigenschaften, insbesondere Qualitätsmerkmale, um zwischen den hergestellten Tabletten eine Tablette mit bevorzugten Eigenschaften zu identifizieren. Dieser Verfahrensschritt wird in der Figur 12 mit der Bezugszahl 76 bezeichnet.

Der Verfahrensschritt der Identifizierung der Einstellung des Konfigurationsparameters, bei der die Tablette mit bevorzugten Eigenschaften hergestellt wurde, ist mit der Bezugszahl 78 gekennzeichnet.

Der finale Verfahrensschritt der Bereitstellung mindestens einer zweiten Rundlaufpresse mit einer optimierten Fülleinheit, wobei die optimierte Fülleinheit mindestens ein Element mit einem fest vorgegebenen Konfigurationsparameter aufweist, bei der die Tablette mit bevorzugten Eigenschaften hergestellt wurde, ist mit der Bezugszahl 80 gekennzeichnet. Es ist ebenso denkbar, dass alternativ oder zusätzlich zur Bereitstellung einer zweiten Rundlaufpresse, die erste Rundlaufpresse in eine Rundlaufpresse mit einer optimierten Fülleinheit umgebaut werden kann.

Das in Figur 12 dargestellte Flussdiagramm soll insbesondere die zeitliche Abfolge der einzelnen Verfahrensschritte 72, 74, 76, 78 und 80 untereinander veranschaulichen. Dabei werden die Verfahrensschritte 72, 74, 76, 78 und 80 in der dargestellten Abfolge des Flussdiagrams nacheinander durchgeführt.

Es ist aber auch denkbar, dass ein Verfahrensschritt beliebig oft wiederholt wird, bevor ein nächster Verfahrensschritt durchgeführt wird.

## Patentansprüche

1. Fülleinheit (10) für eine Rundlaufpresse (12), wobei die Fülleinheit (10) umfasst:
Ein Füllrad (14), das ausgebildet ist, um ein zu dosierendes Medium in Matrizenbohrungen (16) einer Matrizenscheibe (18) der Rundlaufpresse (12) zu füllen;
wobei das Füllrad (14) als Flügelrad (20) ausgebildet ist und ausgebildet ist, um das zu dosierende Medium durch eine rotierende Bewegung mittels seiner Flügel (22) zu fördern;
Ein Dosierrad (24), das ausgebildet ist, um eine Menge an zu dosierendem Medium in den jeweiligen Matrizenbohrungen (16) der Matrizenscheibe (18) zu dosieren,
wobei das Dosierrad (24) als Flügelrad (26) ausgebildet ist und ausgebildet ist, um die Menge des zu dosierenden Mediums durch ein Überstreichen der Matrizenbohrungen (16) der Matrizenscheibe (18) mit seinen Flügeln (28) mittels einer rotierenden Bewegung zu dosieren und überschüssiges Medium zu entfernen;
Ein Zuführrad (30), das ausgebildet ist, um das zu dosierende Medium dem Füllrad (14) zuführen,
wobei das Zuführrad (30) als Flügelrad (32) ausgebildet ist und ausgebildet ist, um das dem Füllrad (14) zuzuführende Medium durch eine rotierende Bewegung mittels seiner Flügel (34) zu fördern;
Mindestens eine Medienzuführeinheit (36), die ausgebildet ist, um das Medium dem Füllrad (14) und/oder dem Zuführrad (30) zuzuführen,
wobei die Flügel (22, 28, 34) des als Flügelrad (20, 26, 32) ausgebildeten Füllrades (14), Dosierrades (24) und/oder Zuführrades (30) jeweils eine Förderfläche (40) aufweisen, mit der das jeweilige Flügelrad (20, 26, 32) das Medium befördert
**dadurch gekennzeichnet, dass**
die Fülleinheit (10) derart ausgebildet ist, dass das Zuführrad (30) in einen Förderpfad des zu dosierenden Mediums, insbesondere durch eine Schwenkbewegung mittels einer Schwenkeinrichtung (33), insbesondere um eine Drehachse (42) des als Flügelrad (20, 26, 32) ausgebildeten Dosierrades (24), schaltbar bzw. aus diesem herausschaltbar ist.

2. Fülleinheit (10) nach Anspruch 1, **dadurch gekennzeichnet, dass** die Fülleinheit (10) derart ausgebildet ist, dass die Medienzuführeinheit (36) eine Förderweiche umfasst mittels der das zu dosierende Medium wahlweise dem Zuführrad (30) oder dem Füllrad (14) zugeführt werden kann.

3. Fülleinheit (10) nach Anspruch 1 oder Anspruch 2, **dadurch gekennzeichnet, dass** die Flügel (22, 28, 34) des als Flügelrad (20, 26, 32) ausgebildeten Füllrades (14), Dosierrades (24) und/oder Zuführrades (30) derart ausgebildet sind, dass eine Förderfläche (40) der jeweiligen Flügel (22, 28, 34) in ihrer Form variierbar ist.

4. Fülleinheit (10) nach dem voranstehenden Anspruch,
**dadurch gekennzeichnet, dass** die Form der Förderfläche (40) durch eine Rotation der Flügel (22, 28, 34) des als Flügelrad (20, 26, 32) ausgebildeten Füllrades (14), Dosierrades (24) und/oder Zuführrades (30) um ihre jeweilige Erstreckungsachse (38) veränderbar ist,
oder durch eine variierbare Neigung der Flügel (22, 28, 34) des als Flügelrad (20, 26, 32) ausgebildeten Füllrades (14), Dosierrades (24) und/oder Zuführrades (30) bezüglich einer sich von der Drehachse (42) des jeweiligen Flügelrades (20, 26, 32) erstreckten Radialrichtung (45) veränderbar ist,
oder durch eine variierbare Krümmung der Flügel (22, 28, 34) des als Flügelrad (20, 26, 32) ausgebildeten Füllrades (14), Dosierrades (24) und/oder Zuführrades (30) veränderbar ist.

5. Fülleinheit (10) nach einem der voranstehenden Ansprüche, **dadurch gekennzeichnet, dass** die Flügel (22, 28, 34) des als Flügelrad (20, 26, 32) ausgebildeten Füllrades (14), Dosierrades (24) und/oder Zuführrades (30) parallel zur Drehachse (42) des jeweiligen Flügelrades (20, 26, 32) verschiebbar ausgestaltet sind.

6. Fülleinheit (10) nach einem der voranstehenden Ansprüche, **dadurch gekennzeichnet, dass** die Flügel (22, 28, 34) des als Flügelrad (20, 26, 32) ausgebildeten Füllrades (14), Dosierrades (24) und/oder Zuführrades (30) einen dreieckigen, einen viereckigen oder einen zumindest teilweise abgerundeten Querschnitt aufweisen.

7. Fülleinheit (10) nach einem der voranstehenden Ansprüche, **dadurch gekennzeichnet, dass** die Flügel (22, 28, 34) des als Flügelrad (20, 26, 32) ausgebildeten Füllrades (14), Dosierrades (24) und/oder Zuführrades (30) entlang zumindest eines Bereichs ihrer jeweiligen Erstreckungsachse (38), insbesondere entlang ihrer gesamten jeweiligen Erstreckungsachse (38), einen gleichbleibenden Querschnitt aufweisen.

8. Fülleinheit (10) nach einem der voranstehenden Ansprüche, **dadurch gekennzeichnet, dass** die Flügel (22, 28, 34) des als Flügelrad (20, 26, 32) ausgebildeten Füllrades (14), Dosierrades (24) und/oder Zuführrades (30) austauschbar ausgebildet sind, insbesondere als Austauschelement zwischen den einzelnen Flügelrädern (20, 26, 32) ausgebildet sind.

9. Fülleinheit (10) nach einem der voranstehenden Ansprüche, **dadurch gekennzeichnet, dass** das als Flügelrad (20, 26, 32) ausgebildete Füllrad (14), Dosierrad (24) und/oder Zuführrad (30) jeweils Flügel (22, 28, 34) mit einem unterschiedlichen Querschnitt entlang ihrer jeweiligen Erstreckungsachse (38) aufweisen.

10. Fülleinheit (10) nach einem der voranstehenden Ansprüche, **dadurch gekennzeichnet, dass** die Flügel (22, 28, 34) des als Flügelrad (20, 26, 32) ausgebildeten Füllrades (14), Dosierrades (24) und/oder Zuführrades (30) derart angeordnet sind, dass eine Verlängerung der jeweiligen Erstreckungsachse (38) beabstandet zu einer Drehachse (42) des jeweiligen Flügelrades (20, 26, 32) verläuft.

11. Fülleinheit (10) nach einem der voranstehenden Ansprüche, **dadurch gekennzeichnet, dass** die Fülleinheit (10) derart ausgebildet sind, dass die Drehrichtung und/oder die Drehgeschwindigkeit des Füllrades (14), Dosierrades (24) und/oder Zuführrades (30) variiert werden kann.

12. Fülleinheit (10) nach einem der voranstehenden Ansprüche, **dadurch gekennzeichnet, dass** die Fülleinheit (10) mindestens einen Elektromotor (50), insbesondere Servomotor (52), aufweist, wobei das als Flügelrad (20, 26, 32) ausgebildete Füllrad (14), Dosierrad (24) und/oder Zuführrad (30) direkt oder über mindestens ein Zahnrad (48) von dem Elektromotor (50), insbesondere Servomotor (52), angetrieben wird und/oder wobei die Rotationsstellung der Flügel (22, 28, 34) und/oder die Neigung der Flügel (22, 28, 34) bezüglich einer sich von der Drehachse (42) des jeweiligen Flügelrades (20, 26, 32) erstreckten Radialrichtung (45), direkt oder über mindestens ein Zahnrad (46) von dem Elektromotor (50), insbesondere Servomotor (52), variiert wird.

13. Verfahren zur Bereitstellung einer optimierten Rundlaufpresse umfassend die Schritte:
Bereitstellung einer ersten Rundlaufpresse (12) mit einer einstellbaren Fülleinheit (10), wobei die einstellbare Fülleinheit (10) mindestens ein Element mit mindestens einem einstellbaren Konfigurationsparameter aufweist;
Herstellung von mehreren Tabletten mit der ersten Rundlaufpresse (12) mit jeweils unterschiedlichen Einstellungen des Konfigurationsparameters;
Analysieren der hergestellten Tabletten auf gewünschte Eigenschaften, insbesondere Qualitätsmerkmale, um zwischen den hergestellten Tabletten eine Tablette mit bevorzugten Eigenschaften zu identifizieren;
Identifizierung der Einstellung des Konfigurationsparameters, bei der die Tablette mit bevorzugten Eigenschaften hergestellt wurde;
Bereitstellung mindestens einer zweiten Rundlaufpresse mit einer optimierten Fülleinheit,
wobei die optimierte Fülleinheit mindestens ein Element mit einem fest vorgegebenen Konfigurationsparameter aufweist, bei der die Tablette mit bevorzugten Eigenschaften hergestellt wurde,
wobei die einstellbare Fülleinheit eine Fülleinheit (10) nach einem der Ansprüche 1 bis 12 ist.

14. Verfahren nach Anspruch 13, **dadurch gekennzeichnet, dass** der einstellbare Konfigurationsparameter die Drehrichtung oder die Drehgeschwindigkeit des als Flügelrad (20, 26, 32) ausgebildeten Füllrades (14), Dosierrades (24) und/oder Zuführrades (30), oder die Form der Förderflächen (40) der Flügel (22, 28, 34), wobei die Form der Förderflächen (40) durch eine Rotation der Flügel (22, 28, 34) um ihre jeweilige Erstreckungsachse (38), oder durch eine Neigung der Flügel (22, 28, 34) bezüglich einer sich von der Drehachse (42) des jeweiligen Flügelrades (20, 26, 32) erstreckten Radialrichtung (45), oder durch ein Variieren der Krümmung der Flügel (22, 28, 34), veränderbar ist, oder das Schalten/Herausschalten des Zuführrades (30) aus dem Förderpfad des zu dosierenden Mediums, ist.

15. Verfahren nach Anspruch 13 oder 14, **dadurch gekennzeichnet, dass** bei dem Schritt
Herstellung von Tabletten mit der ersten Rundlaufpresse (12) die Einstellungen für mehrere Konfigurationsparameter zeitgleich verändert werden.

## Claims

1. A filling unit (10) for a rotary press (12), the filling unit (10) comprising:
a filling wheel (14) which is designed to fill a medium to be metered into die holes (16) of a die plate (18) of the rotary press (12);
wherein the filling wheel (14) is designed as an impeller (20) and is designed to deliver the medium to be metered via a rotating movement by means of its vanes (22);
a metering wheel (24) which is designed to meter a quantity of medium to be metered into the respective die holes (16) of the die plate (18),
wherein the metering wheel (24) is designed as an impeller (26) and is designed to meter the amount of the medium to be metered and to remove excess medium by scraping over the die holes (16) of the die plate (18) with its vanes (28) via a rotating movement;
a feeding wheel (30) which is designed to feed the medium to be metered to the filling wheel (14),
wherein the feeding wheel (30) is designed as an impeller (32) and is designed to deliver the medium to be supplied to the filling wheel (14) via a rotating movement by means of its vanes (34);
at least one medium supply unit (36) which is designed to supply the medium to the filling wheel (14) and/or the feeding wheel (30),
wherein the vanes (22, 28, 34) or the filling wheel (14), the metering wheel (24) and/or the feeding wheel (30) designed as an impeller (20, 26, 32) each have a delivery surface (40) with which each of the impellers (20, 26, 32) delivers the medium,
**characterized in that**
the filling unit (10) is designed in such a manner that the feeding wheel (30) can be connected to and/or disconnected from a delivery path of the medium to be metered, in particular by a pivoting movement by means of a pivoting device (33), in particular about an axis of rotation (42) of the metering wheel (24) designed as an impeller (20, 26, 32).

2. The filling unit (10) according to claim 1, **characterized in that** the filling unit (10) is designed such that the medium supply unit (36) comprises a shunt gate by means of which the medium to be metered can be supplied selectively to the feeding wheel (30) or to the filling wheel (14).

3. The filling unit (10) according to claim 1 or claim 2, **characterized in that** the vanes (22, 28, 34) of the filling wheel (14), the metering wheel (24) and/or the feeding wheel (30) designed as an impeller (20, 26, 32) are designed such that a delivery surface (40) of the respective vanes (22, 28, 34) can be varied in shape.

4. The filling unit (10) according to the preceding claim,
**characterized in that** the shape of the delivery surface (40) can be modified by a rotation of the vanes (22, 28, 34) of the filling wheel (14), the metering wheel (24) and/or the feeding wheel (30) designed as an impeller (20, 26, 32) about the respective axes of extension (38),
or by a variable inclination of the vanes (22, 28, 34) of the filling wheel (14), metering wheel (24) and/or the feeding wheel (30) designed as an impeller (20, 26, 32) with respect to a radial direction (45) extending from the axis of rotation (42) of the respective impellers (20, 26, 32),
or by a variable curvature of the vanes (22, 28, 34) of the filling wheel (14), the metering wheel (24) and/or the feeding wheel (30) designed as an impeller (20, 26, 32).

5. The filling unit (10) according to any of the preceding claims,
**characterized in that** the vanes (22, 28, 34) of the filling wheel (14), the metering wheel (24) and/or the feeding wheel (30) designed as an impeller (20, 26, 32) are designed to be displaceable parallel to the axis of rotation (42) of the given impeller (20, 26, 32).

6. The filling unit (10) according to any of the preceding claims,
**characterized in that** the vanes (22, 28, 34) of the filling wheel (14), the metering wheel (24) and/or the feeding wheel (30) designed as an impeller (20, 26, 32) have a triangular, rectangular, or at least partially rounded cross section.

7. The filling unit (10) according to any of the preceding claims,
**characterized in that** the vanes (22, 28, 34) of the filling wheel (14), the metering wheel (24) and/or the feeding wheel (30) designed as an impeller (20, 26, 32) have a consistent cross section along at least one region of their respective axes of extension (38), in particular along their entire respective axes of extension (38).

8. The filling unit (10) according to any of the preceding claims,
**characterized in that** the vanes (22, 28, 34) of the filling wheel (14), the metering wheel (24) and/or the feeding wheel (30) designed as an impeller (20, 26, 32) are designed to be exchangeable, and in particular are designed to be an exchangeable element between the individual impellers (20, 26, 32).

9. The filling unit (10) according to any of the preceding claims,
**characterized in that** the filling wheel (14), the metering wheel (24) and/or the feeding wheel (30) designed as an impeller (20, 26, 32) each has/have vanes (22, 28, 34) with a different cross section along their respective axes of extension (38).

10. The filling unit (10) according to any of the preceding claims,
**characterized in that** the vanes (22, 28, 34) of the filling wheel (14), the metering wheel (24) and/or the feeding wheel (30) designed as an impeller (20, 26, 32) are arranged such that an extension of the respective axes of extension (38) runs at a distance from an axis of rotation (42) of the given impeller (20, 26, 32).

11. The filling unit (10) according to any of the preceding claims,
**characterized in that** the filling unit (10) is designed such that the direction of rotation and/or the rotational speed of the filling wheel (14), the metering wheel (24) and/or the feeding wheel (30) can be varied.

12. The filling unit (10) according to any of the preceding claims,
**characterized in that** the filling unit (10) has at least one electric motor (50), in particular a servomotor (52), and the filling wheel (14), the metering wheel (24), and/or the feeding wheel (30) designed as an impeller (20, 26, 32) is/are driven directly or via at least one gearwheel (48) by the electric motor (50), in particular servomotor (52), and/or the rotational position of the vanes (22, 28, 34) and/or the inclination of the vanes (22, 28, 34) is varied directly or via at least one gearwheel (46) by the electric motor (50), in particular servomotor (52), with respect to a radial direction (45) extending from the axis of rotation (42) of the respective impeller (20, 26, 32).

13. A method for providing an optimized rotary press, comprising the steps of:
providing a first rotary press (12) having an adjustable filling unit (10), the adjustable filling unit (10) having at least one element with at least one adjustable configuration parameter;
producing a plurality of tablets with the first rotary press (12) with different settings of the configuration parameter;
analyzing the produced tablets for desired properties, in particular quality features, to identify a tablet with preferred properties among the produced tablets;
identifying the setting of the configuration parameter in which the tablet with preferred properties was produced;
providing at least one second rotary press having an optimized filling unit, wherein the optimized filling unit has at least one element with a fixed, prespecified configuration parameter with which the tablet with preferred properties was produced,
wherein the adjustable filling unit is a filling unit (10) according to any of claims 1 to 12.

14. The method according to claim 13, **characterized in that** the adjustable configuration parameter is the direction of rotation or the rotational speed of the filling wheel (14), the metering wheel (24), and/or the feeding wheel (30) designed as an impeller (20, 26, 32), or the shape of the delivery surfaces (40) of the vanes (22, 28, 34), wherein the shape of the delivery surfaces (40) is variable by a rotation of the vanes (22, 28, 34) about their respective axes of extension (38), or by an inclination of the vanes (22, 28, 34) with respect to a radial direction (45) extending from the axis of rotation (42) of the respective impeller (20, 26, 32), or by varying the curvature of the vanes (22, 28, 34), or connecting/disconnecting the feeding wheel (30) to or from the delivery path of the medium to be metered.

15. The method according to claim 13 or 14, **characterized in that,** in the step of
producing tablets with the first rotary press (12), the settings for multiple configuration parameters are changed at the same time.

## Revendications

1. Unité de remplissage (10) pour une presse rotative (12), l'unité de remplissage (10) comprenant :
une roue de remplissage (14) qui est réalisée pour remplir des trous de matrice (16) d'un disque de matrice (18) de la presse rotative (12) avec un milieu à doser ;
la roue de remplissage (14) étant réalisée sous forme de roue à ailettes (20) et étant réalisée pour transporter le milieu à doser par un mouvement rotatif à l'aide de ses ailettes (22) ;
une roue de dosage (24) qui est réalisée pour doser une quantité de milieu à doser dans les trous de matrice (16) respectifs du disque de matrice (18),
la roue de dosage (24) étant réalisée sous forme de roue à ailettes (26) et étant réalisée pour doser la quantité du milieu à doser par un balayage des trous de matrice (16) du disque de matrice (18) avec ses ailettes (28) à l'aide d'un mouvement rotatif, et pour retirer le milieu en excès ;
une roue d'acheminement (30) qui est réalisée pour acheminer le milieu à doser jusqu'à la roue de remplissage (14), la roue d'acheminement (30) étant réalisée sous forme de roue à ailettes (32) et étant réalisée pour transporter le milieu à acheminer jusqu'à la roue de remplissage (14) par un mouvement rotatif à l'aide de ses ailettes (34) ;
au moins une unité d'acheminement de milieu (36) qui est réalisée pour acheminer le milieu jusqu'à la roue de remplissage (14) et/ou la roue d'acheminement (30),
les ailettes (22, 28, 34) de la roue de remplissage (14), de la roue de dosage (24) et/ou de la roue d'acheminement (30) réalisées sous forme de roues à ailettes (20, 26, 32) présentant respectivement une surface de transport (40), à l'aide de laquelle la roue à ailettes (20, 26, 32) respective transporte le milieu
**caractérisée en ce que**
l'unité de remplissage (10) est réalisée de telle sorte que la roue d'acheminement (30) peut être commutée dans un trajet de transport du milieu à doser ou hors de celui-ci, en particulier par un mouvement de pivotement à l'aide d'un dispositif de pivotement (33), en particulier autour d'un axe de rotation (42) de la roue de dosage (24) réalisée sous forme de roue à ailettes (20, 26, 32).

2. Unité de remplissage (10) selon la revendication 1, **caractérisée en ce que** l'unité de remplissage (10) est réalisée de telle sorte que l'unité d'acheminement de milieu (36) comprend un aiguillage de transport à l'aide duquel le milieu à doser peut être acheminé sélectivement jusqu'à la roue d'acheminement (30) ou jusqu'à la roue de remplissage (14).

3. Unité de remplissage (10) selon la revendication 1 ou la revendication 2, **caractérisée en ce que** les ailettes (22, 28, 34) de la roue de remplissage (14), de la roue de dosage (24) et/ou de la roue d'acheminement (30) réalisées sous forme de roues à ailettes (20, 26, 32) sont réalisées de telle sorte que la forme d'une surface de transport (40) des ailettes (22, 28, 34) respectives peut être changée.

4. Unité de remplissage (10) selon la revendication précédente,
**caractérisée en ce que** la forme de la surface de transport (40) peut être modifiée par une rotation des ailettes (22, 28, 34) de la roue de remplissage (14), de la roue de dosage (24) et/ou de la roue d'acheminement (30) réalisées sous forme de roues à ailettes (20, 26, 32) autour de leur axe d'étendue (38) respectif,
ou peut être modifiée par une inclinaison changeable des ailettes (22, 28, 34) de la roue de remplissage (14), de la roue de dosage (24) et/ou de la roue d'acheminement (30) réalisées sous forme de roues à ailettes (20, 26, 32) par rapport à une direction radiale (45) s'étendant à partir de l'axe de rotation (42) de la roue à ailettes (20, 26, 32) respective,
ou peut être modifiée par une courbure changeable des ailettes (22, 28, 34) de la roue de remplissage (14), de la roue de dosage (24) et/ou de la roue d'acheminement (30) réalisées sous forme de roues à ailettes (20, 26, 32).

5. Unité de remplissage (10) selon l'une des revendications précédentes, **caractérisée en ce que** les ailettes (22, 28, 34) de la roue de remplissage (14), de la roue de dosage (24) et/ou de la roue d'acheminement (30) réalisées sous forme de roues à ailettes (20, 26, 32) sont conçues de manière à pouvoir être déplacées parallèlement à l'axe de rotation (42) de la roue à ailettes (20, 26, 32) respective.

6. Unité de remplissage (10) selon l'une des revendications précédentes, **caractérisée en ce que** les ailettes (22, 28, 34) de la roue de remplissage (14), de la roue de dosage (24) et/ou de la roue d'acheminement (30) réalisées sous forme de roues à ailettes (20, 26, 32) présentent une section transversale triangulaire, quadrangulaire ou au moins partiellement arrondie.

7. Unité de remplissage (10) selon l'une des revendications précédentes, **caractérisée en ce que** les ailettes (22, 28, 34) de la roue de remplissage (14), de la roue de dosage (24) et/ou de la roue d'acheminement (30) réalisées sous forme de roues à ailettes (20, 26, 32) présentent, le long d'au moins une région de leur axe d'étendue (38) respectif, en particulier le long de tout leur axe d'étendue (38) respectif, une section transversale constante.

8. Unité de remplissage (10) selon l'une des revendications précédentes, **caractérisée en ce que** les ailettes (22, 28, 34) de la roue de remplissage (14), de la roue de dosage (24) et/ou de la roue d'acheminement (30) réalisées sous forme de roues à ailettes (20, 26, 32) sont réalisées de manière interchangeable, en particulier sont réalisées sous forme d'élément interchangeable entre les roues à ailettes (20, 26, 32) individuelles.

9. Unité de remplissage (10) selon l'une des revendications précédentes, **caractérisée en ce que** la roue de remplissage (14), la roue de dosage (24) et/ou la roue d'acheminement (30) réalisées sous forme de roues à ailettes (20, 26, 32) présentent respectivement des ailettes (22, 28, 34) comportant une section transversale différente le long de leur axe d'étendue (38) respectif.

10. Unité de remplissage (10) selon l'une des revendications précédentes, **caractérisée en ce que** les ailettes (22, 28, 34) de la roue de remplissage (14), de la roue de dosage (24) et/ou de la roue d'acheminement (30) réalisées sous forme de roues à ailettes (20, 26, 32) sont disposées de telle sorte qu'un prolongement de l'axe d'étendue (38) respectif s'étend de manière à être espacé d'un axe de rotation (42) de la roue à ailettes (20, 26, 32) respective.

11. Unité de remplissage (10) selon l'une des revendications précédentes, **caractérisée en ce que** l'unité de remplissage (10) est réalisée de telle sorte que le sens de rotation et/ou la vitesse de rotation de la roue de remplissage (14), de la roue de dosage (24) et/ou de la roue d'acheminement (30) peuvent être changés.

12. Unité de remplissage (10) selon l'une des revendications précédentes, **caractérisée en ce que** l'unité de remplissage (10) présente au moins un moteur électrique (50), en particulier un servomoteur (52), la roue de remplissage (14), la roue de dosage (24) et/ou la roue d'acheminement (30) réalisées sous forme de roues à ailettes (20, 26, 32) étant entraînées par le moteur électrique (50), en particulier par le servomoteur (52), directement ou par l'intermédiaire d'au moins une roue dentée (48), et/ou la position de rotation des ailettes (22, 28, 34) et/ou l'inclinaison des ailettes (22, 28, 34) par rapport à une direction radiale (45) s'étendant à partir de l'axe de rotation (42) de la roue à ailettes (20, 26, 32) respective pouvant être changées par le moteur électrique (50), en particulier par le servomoteur (52), directement ou par l'intermédiaire d'au moins une roue dentée (46).

13. Procédé pour la fourniture d'une presse rotative optimisée comprenant les étapes consistant à :
fournir une première presse rotative (12) comportant une unité de remplissage (10) réglable, l'unité de remplissage (10) réglable présentant au moins un élément comportant au moins un paramètre de configuration réglable ;
produire plusieurs comprimés à l'aide de la première presse rotative (12) à l'aide de réglages respectivement différents du paramètre de configuration ;
analyser les comprimés produits en termes de propriétés souhaitées, en particulier de caractéristiques de qualité, afin d'identifier, parmi les comprimés produits, un comprimé comportant des propriétés préférées ;
identifier le réglage du paramètre de configuration avec lequel le comprimé comportant des propriétés préférées a été produit ;
fournir au moins une seconde presse rotative comportant une unité de remplissage optimisée, l'unité de remplissage optimisée présentant au moins un élément comportant un paramètre de configuration prédéfini fixement, avec lequel le comprimé comportant des propriétés préférées a été produit,
l'unité de remplissage réglable étant une unité de remplissage (10) selon l'une des revendications 1 à 12.

14. Procédé selon la revendication 13, **caractérisé en ce que** le paramètre de configuration réglable est le sens de rotation ou la vitesse de rotation de la roue de remplissage (14), de la roue de dosage (24) et/ou de la roue d'acheminement (30) réalisées sous forme de roues à ailettes (20, 26, 32), ou la forme des surfaces de transport (40) des ailettes (22, 28, 34), la forme des surfaces de transport (40) pouvant être modifiée par une rotation des ailettes (22, 28, 34) autour de leur axe d'étendue (38) respectif, ou par une inclinaison des ailettes (22, 28, 34) par rapport à une direction radiale (45) s'étendant à partir de l'axe de rotation (42) de la roue à ailettes (20, 26, 32) respective, ou par un changement de la courbure des ailettes (22, 28, 34), ou est la commutation de la roue d'acheminement (30) dans le trajet de transport du milieu à doser ou hors de celui-ci.

15. Procédé selon la revendication 13 ou 14, **caractérisé en ce que,** dans l'étape de
production de comprimés à l'aide de la première presse rotative (12), les réglages pour plusieurs paramètres de configuration peuvent être modifiés en même temps.
